# EUROPÄISCHE PATENTSCHRIFT

(11) **EP 1 213 528 B1**
(45) Veröffentlichungstag und Bekanntmachung des Hinweises auf die Patenterteilung: **24.08.2005**
(21) Anmeldenummer: 01126537.8
(22) Anmeldetag: 14.11.2001
(51) Int. Cl.: F16M 13/04, G03B 17/56, H04N 5/225

(54) **Balancesystem für handgeführte Kameras**
Balancing device for hand-held cameras
Dispositif d'équilibrage pour caméras portatives

(30) Priorität: 06.12.2000 DE 10060624
(43) Veröffentlichungstag der Anmeldung: 12.06.2002
(60) Teilanmeldung: 05005857.7
(73) Patentinhaber: Sachtler GmbH & Co. KG, 85386 Eching (DE)
(72) Erfinder: Melitopoulos, Jordanis, 83224 Grassau (DE)
(74) Vertreter: HOFFMANN EITLE

(56) Entgegenhaltungen:
- EP-A- 0 360 268
- WO-A-96/15404
- US-A- 4 976 387
- PATENT ABSTRACTS OF JAPAN vol. 1998, no. 14, 31. Dezember 1998 (1998-12-31) -& JP 10 232446 A (BIINOI:KK), 2. September 1998 (1998-09-02)

## Beschreibung

### Technisches Gebiet

Die vorliegende Erfindung betrifft ein Balancesystem für handgeführte Kameras nach dem Oberbegriff des Patentanspruchs 1.

Solche Balancesysteme dienen zum Ausbalancieren von manuell geführten Video- und Filmkameras, wobei zum Führen der Kamera mit einer Hand ein Handgriff vorgesehen ist. Das Balancesystem soll nun verhindern, dass sich Neige- und Kippbewegungen von dem Handgriff auf die Kamera übertragen, denn es sollte stets eine gleichbleibende Ausrichtung der Kamera gewährleistet und ein Neigen oder Kippen der Kamera vermieden werden. Dazu ist das Balancesystem so ausgestaltet, dass die Kamera bezüglich des Handgriffs eine Pendelbewegung ausführen kann. Zum Ausbalancieren der Kamera dienen Kontergewichte, die an einem Ende eines Pendelarms angebracht sind, welcher an seinem anderen Ende an dem Kameraaufbau befestigt ist. Bei geeigneter Wahl und Positionierung der Kontergewichte balanciert die Anordnung aus Pendelarm und Kontergewichten die Kamera so aus, dass sich Neige- oder Kippbewegungen nicht von dem Handgriff auf die Kamera übertragen.

### Stand der Technik

Im Stand der Technik sind solche Balancesysteme zum Führen gängiger Film- und Videokameras bekannt. Der Pendelarm eines aus der EP 360 268 A bekannten Systems ist beispielsweise als Bogen ausgebildet, der an seinem einen Ende mit der Kamera verbunden ist und an dessen anderem Ende die Kontergewichte angebracht werden können. Die Gesamtheit aus Kamera, Bogen und Kontergewicht steht mittels einer sogenannten Balance-Nadel mit einem Handgriff in Verbindung, so dass der Handgriff geneigt und gekippt werden kann, ohne dass die Kamera diesen Bewegungen folgt.

Für Film- und Videoaufnahmen werden neuerdings vermehrt auch leichte, kompakte Kameras verwendet, da mit diesen mittlerweile teilweise ebenso gute Aufnahmen erstellt werden können wie mit gängigen, schwereren Film- und Videokameras. Für solche leichten, kompakten Kameras eignen sich die bekannten Balancesysteme jedoch nur in beschränktem Maße.

### Darstellung der Erfindung

Die Aufgabe der vorliegenden Erfindung besteht darin, ein Balancesystem für leichte handgeführte Kameras zu schaffen, welches bei einfachem Aufbau zum Führen leichter und kompakter Kameras verwendet werden kann.

Diese Aufgabe wird gelöst durch ein Balancesystem gemäß dem Patentanspruch 1.

Demzufolge ist der Handgriff als hohle Balanceglocke ausgeführt, die sich zumindest in ihrem unteren Abschnitt verbreitert. Der Pendelarm ist eine im wesentlichen gerade Pendelstange, die sich durch die Balanceglocke hindurch erstreckt.

Die konische Balanceglocke als Handgriff und die sich durch diese Balanceglocke hindurch erstreckende Pendelstange bieten wesentliche Vorteile. Zum einen liegt die Balanceglocke aufgrund ihrer konischen Ausgestaltung gut in der Hand, und gleichzeitig bietet die sich nach unten verbreiternde Balanceglocke genügend Freiheit für die Pendelbewegung der Pendelstange. Darüber hinaus nimmt das erfindungsgemäße Balancesystem wenig Platz in Anspruch, da die Pendelstange durch die Balanceglocke, also durch den Handgriff hindurch verläuft. Das erfindungsgemäße System kann daher samt einer daran angebrachten kompakten Kamera beispielsweise durch enge Zwischenräume hindurch geführt werden.

Ein weiterer Vorteil des erfindungsgemäßen Balancesystems besteht darin, dass aufgrund der Tatsache, dass die Längsachse der Balanceglocke mit der Längsachse der Pendelachse zusammenfällt, keine zusätzlichen Kippmomente zwischen Handgriff bzw. Balanceglocke und Pendelstange entstehen.

Außerdem kann der Kamera-Haltemechanismus mit der darauf angebrachten Kamera beliebig viele Drehungen um 360° bezüglich der Balanceglocke ausführen.

Das erfindungsgemäße Balancesystem ist insbesondere für Kameras mit einem Gewicht von bis zu 1000g geeignet.

Vorteilhafte Ausgestaltungen des erfindungsgemäßen Balancesystems sind in den weiteren Ansprüchen beschrieben.

Die Lagerung der Pendelstange gegenüber der Balanceglocke erfolgt vorzugsweise z.B. mittels einer kardanischen Aufhängung, so dass die Balanceglocke in jeder Richtung geneigt und gekippt werden kann, ohne dass sich die Neige- oder Kippbewegung auf die zu führende Kamera überträgt. Die kardanische Aufhängung ist im oberen Teil der Balanceglocke angeordnet und besteht in einer vorteilhaften Ausgestaltung z.B. aus zwei konzentrischen Ringen. Der äußere dieser beiden Ringe ist um eine erste Achse herum in der Balanceglocke kippbar angeordnet, und der innere der beiden Ringe ist um eine zweite Achse herum bezüglich des äußeren Rings kippbar.

Zum Ausbalancieren der Kamera bei Neige- und Kippbewegungen der Balanceglocke übt das Kontergewicht ein Gegenmoment aus, wobei der Abstand zwischen dem Kontergewicht und dem Lagerpunkt der Pendelstange in der Balanceglocke den Hebelarm bildet. Um dieses Gegenmoment für verschiedene Kameratypen mit verschiedenen Kameragewichten einstellen zu können, ist das Kontergewicht lösbar an der Pendelstange anbringbar, so dass je nach Kameragewicht ein leichteres oder ein schwereres Kontergewicht verwendet werden kann. Außerdem kann das Kontergewicht entlang der Pendelstange verschoben und an verschiedenen Stellen der Pendelstange befestigt werden, so dass die Position des Kontergewichts bezüglich der Kamera und somit der obengenannte Hebelarm des Gegenmoments ebenfalls für verschiedene Kameratypen angepasst werden kann.

Die Wahl eines geeigneten Kontergewichts sowie die passende Einstellung der Position des Kontergewichts ist insofern wichtig, als das Balancesystem bei einer ungeeigneten Position des Kontergewichts und/oder einem zu schweren oder zu leichten Kontergewicht seine Funktion nicht erfüllt und die Kamera ins Pendeln gerät. Auch das Gewicht von zusätzlich angebrachtem Kamerazubehör wie Leuchten oder Batterien kann das erfindungsgemäße Balancesystem aufgrund des in Gewicht und Position anpassbaren Kontergewichts ausbalancieren.

Zur Befestigung und Verschiebung des Kontergewichts an der Pendelstange bestehen mehrere Möglichkeiten. Das Kontergewicht kann bezüglich der Pendelstange stufenlos verschiebbar und an einer beliebigen Stelle der Pendelstange fixierbar sein, so dass seine Position für jede beliebige Kamera, ggf. auch für zusätzlich angebrachtes Kamerazubehör, exakt passend eingestellt werden kann. Hierzu kann das Kontergewicht beispielsweise eine Bohrung aufweisen, durch welche die Pendelstange hindurchgeführt wird. Die Pendelstange kann dann beispielsweise ein Außengewinde aufweisen, so dass das Kontergewicht mittels einer Befestigungsmutter an der Pendelstange befestigt werden kann. Die Befestigungsmutter kann einfach auf die Pendelstange aufgeschraubt werden, so dass keinerlei Werkzeug notwendig ist. Alternative Möglichkeiten für eine stufenlose Verstellbarkeit des Kontergewichts sind ebenso denkbar.

In einer anderen vorteilhaften Ausgestaltung des erfindungsgemäßen Balancesystems kann das Kontergewicht an bestimmten Stellen der Pendelstange fixiert werden. Dazu können beispielsweise Bohrungen in der Pendelstange ausgeformt sein, in die Steckstifte eingesteckt werden können, um das Kontergewicht an der Pendelstange zu fixieren. Hier ist die Position des Kontergewichts an der Pendelstange nicht stufenlos verstellbar. Dafür bietet diese Ausgestaltung jedoch den Vorteil, dass das Kontergewicht mittels der Stifte schnell und einfach an bestimmten Positionen an der Pendelstange angebracht werden kann, die den geeigneten Lagen von Kontergewichten für bestimmte, häufig verwendete Kameratypen entsprechen.

Die entsprechenden Stellen der Pendelstange können dann mit Angaben des entsprechenden Kameratyps und des erforderlichen Kontergewichts versehen sein.

Der sich verbreiternde Abschnitt der Außenwand der Balanceglocke verläuft vorzugsweise konisch, und die Außenwand des konischen Abschnitts der Balanceglocke ist vorzugsweise um einen Winkel zwischen 5° und 25° bezüglich der Längsachse der Balanceglocke geneigt. Ein in einem solchen Winkel verlaufender Konus ist bequem in der Hand zu halten, und gleichzeitig bietet der Konus einen ausreichen großen Pendelraum für die Pendelstange.

Wenn eine Kamera auf dem Kamera-Haltemechanismus angebracht ist, kann es sein, dass der Schwerpunkt der Kamera nicht auf der Längsachse der Pendelstange liegt, so dass sich die Kamera und der Kamera-Haltemechanismus gegenüber der Balanceglocke neigen können. Um dies zu kompensieren, kann das Kontergewicht so exzentrisch an der Pendelstange angebracht sein, dass der Schwerpunkt des Kontergewichts nicht auf der Längsachse der Pendelstange liegt. Durch den Abstand des Schwerpunkts des Kontergewichts von der Pendelstange entsteht ein Neigemoment, das bei geeigneter Position des Kontergewichts der unerwünschten Neigung der Kamera entgegenwirken kann. Ebenso ist es möglich, das Kontergewicht so an der Pendelstange anzubringen, dass der Schwerpunkt des Kontergewichts auf der Längsachse der Pendelstange liegt.

Das Kontergewicht kann auch mehrere Bohrungen aufweisen, um es wahlweise exzentrisch oder zentrisch bezüglich der Pendelstange anbringen zu können.

Zum Verschieben des Schwerpunkts der Kamera bezüglich der Pendelstange kann jedoch in einem bestimmten Maße ebenso der Kamera-Haltemechanismus selbst dienen, wenn dieser gemäß einer vorteilhaften Ausführungsform aus einer fest mit der Pendelstange verbundenen Basis und aus einer Anbringplatte besteht, an die Kamera angebracht wird und die mittels Stellschrauben nach rechts, links, vorn und hinten bezüglich der Basis verschoben werden kann.

Das Balancesystem dient zum translatorischen Führen, aber auch zum Drehen der Kamera um die Längsachse der Pendelstange herum. Bei einer langsamen Drehung der Balanceglocke wird sich die Kamera mitdrehen, einer schnelleren Drehung der Balanceglocke wird sie aufgrund ihrer Trägheit nicht folgen. Um die Drehung der Kamera genau steuern zu können, kann unten an dem Kamera-Haltemechanismus ein zusätzlicher Greifring vorgesehen sein. Der Kameramann kann die Kamera dann mit einer Hand mittels der Balanceglocke halten und mit der anderen Hand mittels des Greifrings bezüglich der Balanceglocke kontrolliert drehen.

Schließlich können mehrere Kontergewichte gleichzeitig an der Pendelstange angebracht werden. Schwerere Kontergewichte können dann aus mehreren leichteren Kontergewichten zusammengesetzt werden und brauchen nicht als Einzelteile vorgesehen zu werden.

### Kurze Beschreibung der Zeichnungen

Nachfolgend wird die Erfindung anhand einer beispielhaft in den Zeichnungen dargestellten Ausführungsform näher erläutert.

Im einzelnen zeigt
- Fig. 1: ein erfindungsgemäßes Balancesystem für handgeführte Kameras, und
- Fig. 2: einen Schnitt entlang der Linie II-II aus Fig. 1.

### Ausführliche Beschreibung einer bevorzugten Ausführungsform

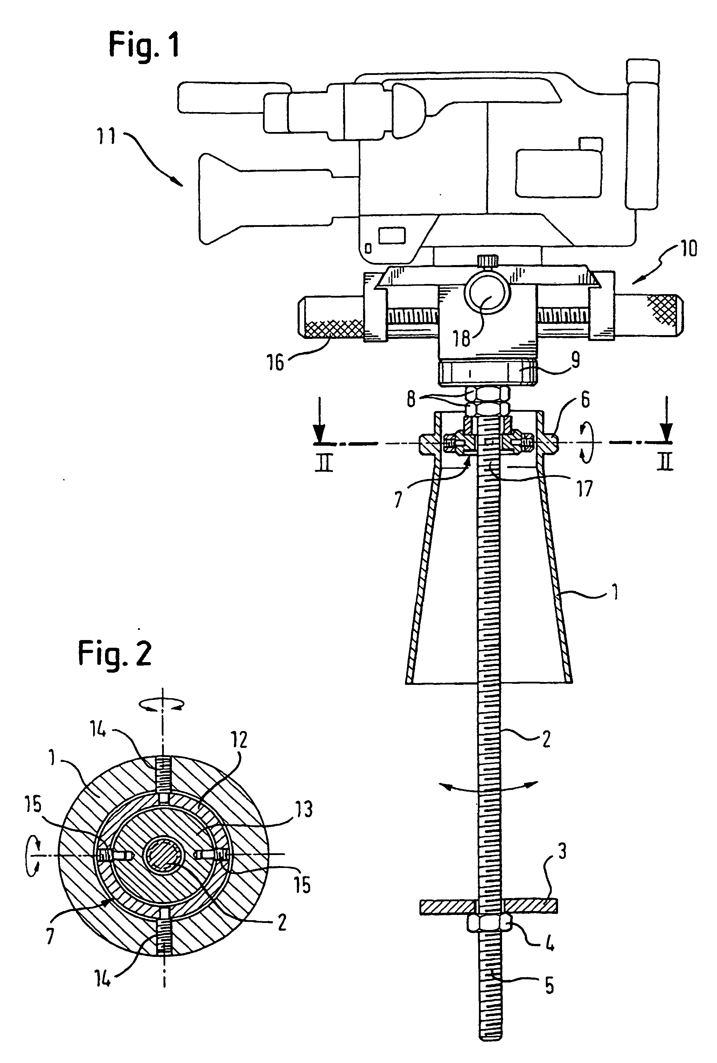

Fig. 1 zeigt eine bevorzugte Ausführungsform des erfindungsgemäßen Balancesystems für eine handgeführte Kamera 11. Als Handgriff zum Führen der Kamera dient eine Balanceglocke 1, die sich in ihrem unteren Abschnitt konisch verbreitert und beispielsweise aus Aluminium oder einem anderen Leichtmetall, aus Kunststoff, aus Metall oder aus einem Kompositmaterial besteht. Aufgrund ihrer konischen Form liegt die Balanceglocke 1 gut in der Hand. Um zu verhindern, dass die Balanceglocke 1 aus der Hand rutschen kann, ist ein Flansch 6 am oberen Ende der Balanceglocke vorgesehen. Außerdem kann zu diesem Zweck an der Außenfläche der Balanceglocke 1 ein Griffprofil vorgesehen sein (nicht dargestellt).

Falls die Balanceglocke 1 einmal nicht in der Hand gehalten werden soll, kann sie in ein Spezialgestell, ein Stativ o.ä. eingespannt werden, wozu der Flansch 6 ebenfalls vorteilhaft ist.

Die konische Balanceglocke 1 bietet ausreichend Pendelraum für eine Pendelstange 2. Diese Pendelstange 2 ist mittels einer kardanischen Aufhängung 7 in der Balanceglocke 1 gelagert, so dass die bezüglich der Balanceglocke 1, d.h. bezüglich des Handgriffs, in jede Richtung Pendelbewegungen ausführen kann. Ein Kamera-Haltemechanismus 10 für die Kamera 11 ist am oberen Ende der Pendelstange 2 befestigt, so dass er ebenfalls pendelnd bezüglich der Balanceglocke 1 gelagert ist.

Zum Verschieben der Kamera 11 bezüglich der Längsachse der Pendelstange 2 nach rechts, links, vorn und hinten dienen Stellschrauben 16 und 18.

Aus Fig. 2 ist die kardanische Aufhängung genauer ersichtlich: ein äußerer Ring 12 ist mittels zweier Schrauben 14 kippbar bezüglich der Balanceglocke 1 gelagert, und ein innerer Ring 13 ist mittels zweier Schrauben 15 kippbar bezüglich des äußeren Rings 12 gelagert, wobei die beiden Drehachsen in einer Ebene liegen und einen Winkel von 90° bilden. Die beiden Ringe können beispielsweise aus Aluminium oder auch aus gespritztem Kunststoff hergestellt sein. Die Pendelstange 2 verläuft durch den inneren Ring 13 hindurch, und zwei Muttern 8, die auf einen oberen Gewindeabschnitt 17 der Pendelstange 2 aufgeschraubt sind (vgl. Fig. 1), ruhen auf diesem inneren Ring 13 und halten so die Pendelstange 2 in der kardanischen Aufhängung 7. Alternativ sind zu diesem Zweck anstelle der Muttern 8 auch verschiedene andere Elemente vorstellbar, die auf geeignete Art und Weise - beispielsweise durch Verstiften - an der Pendelstange befestigt werden oder auch integral mit der Pendelstange ausgebildet sein können.

Zum Ausbalancieren der Kamera 11 bezüglich der Balanceglocke 1 ist am unteren Ende der Pendelstange 2 ein Kontergewicht 3 angebracht. Das Kontergewicht 3 weist eine Bohrung auf, durch die sich die Pendelstange 2 erstreckt, und die Festlegung des Kontergewichts 3 gegenüber der Pendelstange 2 erfolgt mittels einer Befestigungsmutter 4, die auf einen unteren Gewindeabschnitt 5 der Pendelstange 2 aufgeschraubt ist. Die Befestigungsmutter 4 kann durch andere geeignete Befestigungselemente ersetzt werden, die auf unterschiedliche Art und Weise lösbar an der Pendelstange 2 angebracht werden können.

Durch Herauf- und Herunterschrauben der Befestigungsmutter 4 an dem unteren Gewindeabschnitt 5 der Pendelstange 2 kann das Kontergewicht 3 stufenlos bezüglich der Pendelstange 2 verschoben werden. Außerdem kann die Befestigungsmutter 4 vollständig von der Pendelstange 2 abgeschraubt werden, so dass das Kontergewicht 3 gegen ein anderes, schwereres oder leichteres Kontergewicht ausgetauscht werden kann. Durch die Wahl eines geeigneten Kontergewichts 3 und eines geeigneten Abstands des Kontergewichts 3 von der Kamera 11, der in dieser Ausführungsform mittels der Befestigungsmutter 4 stufenlos eingestellt werden kann, kann das Balancesystem exakt an das Gewicht der momentan auf dem Kamera-Haltemechanismus 10 befestigten Kamera 11 angepasst werden. Dann behält die Kamera 11 auch bei Neige- und Kippbewegungen der Balanceglocke 1 ihre ausbalancierte Lage bei. Die Neige- und Kippbewegungen dürfen dabei selbstverständlich nur in dem Bereich erfolgen, in dem die Pendelstange 2 nicht die Innenfläche der Balanceglocke 1 berührt.

Schließlich kann der Kameramann die Kamera 11 mit der Hand, die nicht die Balanceglocke 1 hält, mittels eines Greifrings 9 bezüglich der Balanceglocke 1 um die Längsachse der Pendelstange 2 herum kontrolliert drehen.

## Patentansprüche

1. Balancesystem für handgeführte Kameras mit einem Kamera-Haltemechanismus, einem Pendelarm, zumindest einem Kontergewicht und einem Handgriff, wobei das Kontergewicht an den Pendelarm anbringbar und der Pendelarm mit dem Kamera-Haltemechanismus verbunden ist und wobei der Pendelarm an dem Handgriff pendelnd gelagert ist,
**dadurch gekennzeichnet, dass**
der Handgriff als hohle Balanceglocke (1) ausgeführt ist, die sich zumindest in ihrem in Gebrauchsstellung unteren Abschnitt verbreitert, und dass der Pendelarm eine im wesentlichen gerade Pendelstange (2) ist, die sich durch die Balanceglocke (1) hindurch erstreckt.

2. Balancesystem nach Anspruch 1, **dadurch gekennzeichnet, dass** die Pendelstange (2) mittels einer kardanischen Aufhängung (7), die im oberen Teil der Balanceglocke (1) angeordnet ist, pendelnd an der Balanceglocke (1) gelagert ist.

3. Balancesystem nach Anspruch 2, **dadurch gekennzeichnet, dass** die kardanische Aufhängung (7) aus zwei innerhalb der Balanceglocke (1) angeordneten, ineinanderliegenden konzentrischen Ringen (12, 13) besteht, wobei die Pendelstange (2) sich durch den inneren (13) dieser beiden Ringe erstreckt, welcher innere Ring (13) bezüglich des äußeren Rings (12) um eine erste Achse kippbar gelagert ist, wogegen der äußere Ring (12) bezüglich der Balanceglocke (1) um eine zweite Achse kippbar gelagert ist.

4. Balancesystem nach mindestens einem der vorangehenden Ansprüche, **dadurch gekennzeichnet, dass** das Kontergewicht (3) zumindest eine Bohrung aufweist, deren Innendurchmesser etwas größer ist als der Außendurchmesser der Pendelstange (2), so dass das Kontergewicht (3) mittels dieser Bohrung auf die Pendelstange (2) aufschiebbar ist.

5. Balancesystem nach mindestens einem der vorangehenden Ansprüche, **dadurch gekennzeichnet, dass** die Pendelstange (2) zumindest abschnittsweise mit einem Außengewinde (5) versehen ist und dass zumindest eine Befestigungsmutter (4) zum Fixieren des Kontergewichts (3) an der Pendelstange (2) im Bereich dieses Außengewindes (5) anbringbar ist.

6. Balancesystem nach mindestens einem der vorangehenden Ansprüche, **dadurch gekennzeichnet, dass** das Kontergewicht (3) stufenlos entlang der Pendelstange (2) verschiebbar und an jeder beliebigen Stelle entlang der Pendelstange (2) fixierbar ist.

7. Balancesystem nach mindestens einem der Ansprüche 1 bis 5, **dadurch gekennzeichnet, dass** das Kontergewicht (3) entlang der Pendelstange (2) verschiebbar und an vorbestimmten Stellen entlang der Pendelstange (2) fixierbar ist.

8. Balancesystem nach mindestens einem der vorangehenden Ansprüche, **dadurch gekennzeichnet, dass** die Pendelstange (2) Bohrungen aufweist und dass das Kontergewicht (3) mittels Steckstiften, die in diese Bohrungen einsteckbar sind, bezüglich der Pendelstange (2) fixierbar ist.

9. Balancesystem nach mindestens einem der vorangehenden Ansprüche, **dadurch gekennzeichnet, dass** sich zumindest der in Gebrauchsstellung untere Abschnitt der Balanceglocke (1) konisch verbreitert.

10. Balancesystem nach Anspruch 9, **dadurch gekennzeichnet, dass** sich zumindest der in Gebrauchsstellung untere Abschnitt der Balanceglocke (1) gemäß eines Winkels von 5 bis 25° bezüglich der Längsachse der Balanceglocke (1) konisch verbreitert.

11. Balancesystem nach mindestens einem der vorangehenden Ansprüche, **dadurch gekennzeichnet, dass** das Kontergewicht (3) so an der Pendelstange (2) anbringbar ist, dass der Schwerpunkt des Kontergewichts (3) auf der Längsachse der Pendelstange (2) liegt.

12. Balancesystem nach mindestens einem der vorangehenden Ansprüche 1-10, **dadurch gekennzeichnet, dass** das Kontergewicht (3) so an der Pendelstange (2) anbringbar ist, dass der Schwerpunkt des Kontergewichts (3) nicht auf der Längsachse der Pendelstange (2) liegt.

13. Balancesystem nach mindestens einem der vorangehenden Ansprüche, **dadurch gekennzeichnet, dass** der Kamera-Haltemechanismus (10) aus einer fest mit der Pendelstange verbundenen Basis und aus einer Anbringplatte besteht, an der eine Kamera (11) anbringbar ist und die mittels Stellschrauben (16, 18) in Rechts-/Links- und/oder in Vorwärts-/RückwärtsRichtung bezüglich der Basis verschiebbar ist.

14. Balancesystem nach mindestens einem der vorangehenden Ansprüche, **dadurch gekennzeichnet, dass** der Kamera-Haltemechanismus (10) an seiner Unterseite einen zusätzlichen Greifring (9) aufweist, mittels dessen die Kamera (11) gegenüber der Balanceglocke (1) gedreht werden kann.

15. Balancesystem nach mindestens einem der vorangehenden Ansprüche, **dadurch gekennzeichnet, dass** mehrere Kontergewichte (3) vorgesehen sind, von denen eine geeignete Anzahl an der Pendelstange (2) anbringbar ist.

## Claims

1. Balance system for hand-held cameras with a camera holding mechanism, a pendulum arm, at least one counter-weight and a handle, wherein the counter-weight can be attached to the pendulum arm and the pendulum arm is connected to the camera holding mechanism and wherein the pendulum arm is pendulum-mounted on the handle, **characterised in that** the handle is constructed as a hollow balance skirt (1) which widens at least in its lower section in the working position, and **in that** the pendulum arm is a substantially straight pendulum rod (2) which extends through the balance skirt (1).

2. Balance system according to claim 1, **characterised in that** the pendulum rod (2) is pendulum-mounted on the balance skirt (1) by means of a gimbal suspension (7) which is arranged in the upper portion of the balance skirt (1).

3. Balance system according to claim 2, **characterised in that** the gimbal suspension (7) consists of two concentric rings (12, 13) arranged within the balance skirt (1) and located one inside the other, wherein the pendulum rod (2) extends through the inner one (13) of these two rings, which inner ring (13) is mounted so as to be tiltable about a first axis relative to the outer ring (12), whereas the outer ring (12) is mounted so as to be tiltable about a second axis relative to the balance skirt (1).

4. Balance system according to one or more of the preceding claims, **characterised in that** the counter-weight (3) has at least one bore of which the inside diameter is slightly larger than the outside diameter of the pendulum rod (2), so that the counter-weight (3) can be fitted over the pendulum rod (2) by means of this bore.

5. Balance system according to one or more of the preceding claims, **characterised in that** the pendulum rod (2) is at least in one section provided with an external thread (5) and **in that** at least one fastening nut (4) for fixing the counter-weight (3) can be attached to the pendulum rod (2) in the region of this external thread (5).

6. Balance system according to one or more of the preceding claims, **characterised in that** the counter-weight (3) is steplessly displaceable along the pendulum rod (2) and can be fixed at any point along the pendulum rod (2).

7. Balance system according to one or more of claims 1 to 5, **characterised in that** the counter-weight (3) is displaceable along the pendulum rod (2) and can be fixed at predetermined points along the pendulum rod (2).

8. Balance system according to one or more of the preceding claims, **characterised in that** the pendulum rod (2) has bores and **in that** the counter-weight (3) can be fixed relative to the pendulum rod (2) by means of guide pins which can be inserted in these bores.

9. Balance system according to one or more of the preceding claims, **characterised in that** at least the lower section of the balance skirt (1) in the working position widens conically.

10. Balance system according to claim 9, **characterised in that** at least the lower section of the balance skirt (1) in the working position widens conically with an angle of 5 to 25° relative to the longitudinal axis of the balance skirt (1).

11. Balance system according to one or more of the preceding claims, **characterised in that** the counter-weight (3) can be attached to the pendulum rod (2) in such a way that the centre of gravity of the counter-weight (3) is located on the longitudinal axis of the pendulum rod (2).

12. Balance system according to one or more of the preceding claims 1-10, **characterised in that** the counter-weight (3) can be attached to the pendulum rod (2) in such a way that the centre of gravity of the counter-weight (3) is not located on the longitudinal axis of the pendulum rod (2).

13. Balance system according to one or more of the preceding claims, **characterised in that** the camera holding mechanism (10) consists of a base rigidly connected to the pendulum rod and a mounting plate to which a camera (11) can be attached and which is displaceable relative to the base in a right/left and/or in a forward/backward direction by means of set screws (16, 18).

14. Balance system according to one or more of the preceding claims, **characterised in that** the camera holding mechanism (10) has on its lower side an additional gripping ring (9) by means of which the camera (11) can be rotated relative to the balance skirt (1).

15. Balance system according to one or more of the preceding claims, **characterised in that** several counter-weights (3) are provided, of which a suitable number can be attached to the pendulum rod (2).

## Revendications

1. Système d'équilibrage pour des caméras portatives, avec un mécanisme de maintien de caméra, un bras pendulaire, au moins un contrepoids et une poignée, le contrepoids étant susceptible d'être monté sur le bras pendulaire et le bras pendulaire étant relié au mécanisme de maintien de caméra et le bras pendulaire étant monté de façon pendulaire sur la poignée,
**caractérisé en ce que**
la poignée est réalisée sous la forme de cloche d'équilibrage (1) creuse, qui s'élargit au moins dans son tronçon situé en position inférieure en position d'utilisation, et **en ce que** le bras pendulaire est une tige pendulaire (2) sensiblement rectiligne, s'étendant à travers la cloche d'équilibrage (1).

2. Système d'équilibrage selon la revendication 1, **caractérisé en ce que** la tige pendulaire (2) est montée de façon pendulaire sur la cloche d'équilibrage (1) à l'aide d'une suspension à la cardan (7), disposée dans la partie supérieure de la cloche d'équilibrage (1).

3. Système d'équilibrage selon la revendication 2, **caractérisé en ce que** la suspension à la cardan (7) est formée de deux anneaux (12, 13) concentriques, placés l'un à l'intérieur de l'autre, disposés à l'intérieur de la cloche d'équilibrage (1), sachant que la tige pendulaire (2) s'étend à travers l'anneau intérieur (13) de ces deux anneaux, ledit anneau intérieur (13) étant monté, par rapport à l'anneau extérieur (12), de manière à pouvoir basculer autour d'un premier axe, alors que, par contre, l'anneau extérieur (12) est monté, par rapport à la cloche d'équilibrage (1), de manière à pouvoir basculer autour d'un deuxième axe.

4. Système d'équilibrage selon au moins l'une des revendications précédentes, **caractérisé en ce que** le contrepoids (3) présente au moins un perçage, dont le diamètre intérieur est un peu supérieur au diamètre extérieur de la tige pendulaire (2), de manière que le contrepoids (3) puisse être enfilé sur la tige pendulaire (2) au moyen de ce perçage

5. Système d'équilibrage selon au moins l'une des revendications précédentes, **caractérisé en ce que** la tige pendulaire (2) est munie, au moins par tronçons, d'un filetage extérieur (5), et **en ce qu'**au moins un écrou de fixation (4) peut être monté pour fixer le contrepoids (3) sur la tige pendulaire (2) dans la zone de ce filetage extérieur (5).

6. Système d'équilibrage selon au moins l'une des revendications précédentes, **caractérisé en ce que** le contrepoids (3) est susceptible d'être déplacé de façon progressive continue le long de la tige pendulaire (2) et est susceptible d'être fixé en tout emplacements, quelqu'il soit, le long de la tige pendulaire (2).

7. Système d'équilibrage selon au moins l'une des revendications 1 à 5, **caractérisé en ce que** le contrepoids (3) est susceptible être déplacé le long de la tige pendulaire (2) et est susceptible d'être fixé en des endroits prédéterminés le long de la tige pendulaire (2).

8. Système d'équilibrage selon au moins l'une des revendications précédentes, **caractérisé en ce que** la tige pendulaire (2) présente des perçages, et **en ce que** le contrepoids (3) est susceptible d'être fixé par rapport à la tige pendulaire (2) à l'aide de tiges à enfichage, susceptibles d'être enfichées dans ces perçages

9. Système d'équilibrage selon au moins l'une des revendications précédentes, **caractérisé en ce qu'**au moins le tronçon inférieur, en position d'utilisation, de la cloche d'équilibrage (1) est élargi de façon conique.

10. Système d'équilibrage selon la revendication 9, **caractérisé en ce qu'**au moins le tronçon inférieur, en position d'utilisation, de la cloche d'équilibrage (1) est élargi de façon conique, selon un angle de 5 à 25° par rapport à l'axe longitudinal de la cloche d'équilibrage (1).

11. Système d'équilibrage selon au moins l'une des revendications précédentes, **caractérisé en ce que** le contrepoids (3) est susceptible d'être monté sur la tige pendulaire (2), de manière que le centre de gravité du contrepoids (3) soit situé sur l'axe longitudinal de la tige pendulaire (2).

12. Système d'équilibrage selon au moins l'une des revendications 1 à 10 précédentes, **caractérisé en ce que** le contrepoids (3) est susceptible d'être monté sur la tige pendulaire (2), de manière que le centre de gravité du contrepoids (3) ne soit pas situé sur l'axe longitudinal de la tige pendulaire (2).

13. Système d'équilibrage selon au moins l'une des revendications précédentes, **caractérisé en ce que** le mécanisme de maintien de caméra (10) est formé d'une base, reliée rigidement à la tige pendulaire, et d'une plaque de montage sur laquelle une caméra (11) est susceptible d'être montée et qui est déplaçable, au moyen de vis de réglage (16, 18), dans la direction droite/gauche et/ou avant/arrière par rapport à la base.

14. Système d'équilibrage selon au moins l'une des revendications précédentes, **caractérisé en ce que** le mécanisme de maintien de caméra (10) présente, sur sa face inférieure, une bague de saisie (9) supplémentaire, au moyen de laquelle la caméra (11) peut être tournée par rapport à la cloche d'équilibrage (1).

15. Système d'équilibrage selon au moins l'une des revendications précédentes, **caractérisé en ce qu'**une pluralité de contrepoids (3) sont prévus, dont un nombre approprié est susceptible d'être monté sur la tige pendulaire (2).
